Europäisches Patentamt

European Patent Office

Office européen des brevets

(11) Veröffentlichungsnummer: **0 086 283**
A1

## (12) EUROPÄISCHE PATENTANMELDUNG

(21) Anmeldenummer: **82201589.7**

(22) Anmeldetag: **13.12.82**

(51) Int. Cl.³: **B 23 C  3/12,** B 27 D  5/00,
B 23 Q  3/00

(30) Priorität: **11.02.82  CH 859/82**

(43) Veröffentlichungstag der Anmeldung: **24.08.83**
**Patentblatt 83/34**

(84) Benannte Vertragsstaaten: **AT BE CH DE FR GB IT LI LU**
**NL SE**

(71) Anmelder: **Firma Ernst Baumgartner, CH-3256 Dieterswil**
**(CH)**

(72) Erfinder: **Weber, Hans, Kreuzstrasse 5,**
**CH-3052 Zollikofen (CH)**

(74) Vertreter: **Velgo, Miroslav et al, Bovard & Cie**
**Patentanwälte VSP Optingenstrasse 16,**
**CH-3000 Bern 25 (CH)**

(54)  **Kantenbrechmaschine.**

(57)  Die Kantenbrechmaschine weist einen Tisch, eine am
Tisch angeordnete Aufnahmevorrichtung (13) für Werkstük-
ke, die aus zwei prismenförmigen austauschbaren Linealen
(13a, 13b) besteht, und ein Schneidwerkzeug (2) in Form
eines Eckstirnfräsers auf, der um eine vertikale Achse drehbar ist. Das Schneidwerkzeug (2) ist an einem Ende eines
in einer horizontalen Ebene im Hohlraum des Tisches
schwenkbaren Armes (3) befestigt. Das rotierende Schneidwerkzeug (2) wird in einem knapp unter dem Schneidschlitz
(14) der Aufnahmevorrichtung (13) verlaufenden Kreisbogen bewegt, um die in den Schneidschlitz (14) ragende
Kante des Werkstückes wegzuschneiden. Die kreisbogenförmige Bahn liegt in einer horizontalen Ebene. Beim Vorschub gerät das Schneidwerkzeug (2) bis in die Innenecke
eines abgewinkelten Werkstückes, was durch eine Öffnung
in der Stirnwand des Tisches ermöglicht wird. Mit dieser
Maschine kann das Werkstück automatisch oder auch von
Hand bearbeitet werden.

## KANTENBRECHMASCHINE

Die Erfindung geht aus von einer Kantenbrechmaschine, mit einem Tisch, einer am Tisch angeordneten Aufnahmevorrichtung für Werkstücke, in welcher ein Schneidschlitz für die Kante des Werkstückes gebildet ist, und mit einem Schneidwerkzeug zum Wegschneiden der in den Schneidschlitz ragenden Kante des Werkstückes.

In der deutschen Offenlegungsschrift Nr. 29 20 197 ist eine Ecken-Abrundmaschine beschrieben, die eine Auflagefläche für Werkstücke und ein Schneidelement aufweist, das um eine horizontal gelagerte Achse drehbar und somit ortsfest ist. Die periphäre Schneidfläche des Schneidelementes befindet sich in einem Schneidschlitz der Auflagefläche. Das Schneidlement besteht aus zwei ineinander greifenden Hälften von Scheibenfräsern. Das Werkstück wird seitlich über die Kante des Schneidlementes hinaus mit der Hand bewegt, wodurch die Anschrägung bzw. die Abrundung der Kante erzielt wird. Zur besseren Führung des Werkstückes von Hand wird ein Führungsblock verwendet.

Mit dieser Maschine wird nur eine eingehöhlte Eckenbrechung erzielt.

Es ist weiter nachteilig, dass das Werkstück, um seine Kante zu Brechen, von Hand geführt werden muss, weil das Schneidelement örtlich feststehend ist; das heisst, dass keine Automatisierung möglich ist. Zur Führung des Werkstückes muss ein Führungsblock verwendet werden, der seinerseits inbezug auf
die Längsachse des Schlitzes mittels einer Einstellvorrichtung eingestellt werden muss, welche Einstellvorrichtung auf der Auflagefläche befestigt wird.
Ueberdies ist mit dieser Maschine nicht möglich, das
Ausmass der Anschrägung präzis einzustellen und den
Winkel derselben wesentlich zu ändern (durch die
senkrecht zur Auflagefläche verlaufende Wandung des
Führungsblockes kann nur eine Anschrägung von etwa
$45^{\circ}$ ausgeführt werden).

Der im Patentanspruch 1 angegebenen Erfindung
liegt die Aufgabe zu Grunde, eine Kantenbrechmaschine
zu schaffen, die ausser mit Handvorschub auch mit
automatischem Vorschub mit grossem Abtrag der Kante arbeitet. Die Breite der Anschrägung soll einfach
und präzis einstellbar und ablesbar sein. Das Kantenbrechen soll bis in die Ecken von abgewinkelten Werkstücken geführt werden, so dass in den Ecken derselben
keine Grate übrigbleiben. Bei dieser Maschine
soll auch das Aufsetzten von vollautomatischen Vorrichtungen mit einem Zuführungsmagazin für Werkstücke
möglich sein. Die Anschrägungen sollen in verschiedenem Gradausmass ausführbar sein.

Diese Aufgaben werden bei einer Kantenbrechmaschine
nach dem Oberbegriff des Patentanspruches 1 dadurch gelöst, dass das rotierende Schneidwerkzeug in einer knapp
unter dem Schneidschlitz der Aufnahmevorrichtung verlaufenden, in einer horizontalen Ebene liegenden, kreisbogenförmigen Bahn in stufenlosen Vorschub und in Schnellrücklauf bewegbar ist, und dass in der Stirnwand des
Tisches, an welche das Schneidwerkzueg am Endpunkt seines Vorschubes gelangt, eine Oeffnung vorgesehen ist, die in den Schneidschlitz übergeht und so gestaltet ist, dass das Schneidwerkzeug am Endpunkt seines Vorschubes mit der Stirnwand des Tisches tangential bündig ist.

Es ist von Vorteil, wenn das Schneidwerkzeug ein um eine vertikale Achse drehbarer Eckstirnfräser mit auswechselbaren Hartmetallschneidkörpern ist, der an einem Ende eines in einer horizontalen Ebene schwenkbaren Armes befestigt ist, wobei der stufenlose Vorschub und der Schnellrücklauf des Schneidwerkzeuges hydropneumatisch bzw. pneumatisch oder beide nur hydraulisch mittels eines Kolbenzylinders erfolgen.

Um das Werkstück mühelos und präzis einlegen zu können, ist es von Nutzen, wenn die Aufnahmevorrichtung durch zwei prismenförmige Lineale gebildet ist, deren das eine Lineal gegenüber dem anderen Lineal zur Veränderung der Schneidschlitzbreite parallel und stufenlos querverstellbar ist. Dabei wird das eine Lineal mittels einer Einrichtung querverstellt, die eine Gewindespindel mit Skala, eine Leiste mit zwei Schrägnuten und zwei in die Schrägnuten eingreifende Stifte sowie eine im rechten Winkel zur Längsrichtung des einen Lineals liegende Nut aufweist, in welche ein weiterer Stift eingreift.

Es ist weiter vorteilhaft, wenn an derjenigen Stirnwand des Tisches, an welche das Schneidwerkzeug am Endpunkt seines Vorschubes gelangt, eine Unfallschutzvorrichtung vorgesehen ist, die in vertikaler Ebene von der Stirnwandöffnung wegschwenkbar und in ihre Ausgangsstellung automatisch zurückführbar angeordnet ist.

Der Erfindungsgegenstand wird nachstehend anhand der Zeichnung beispielsweise näher erläutert. Es zeigen

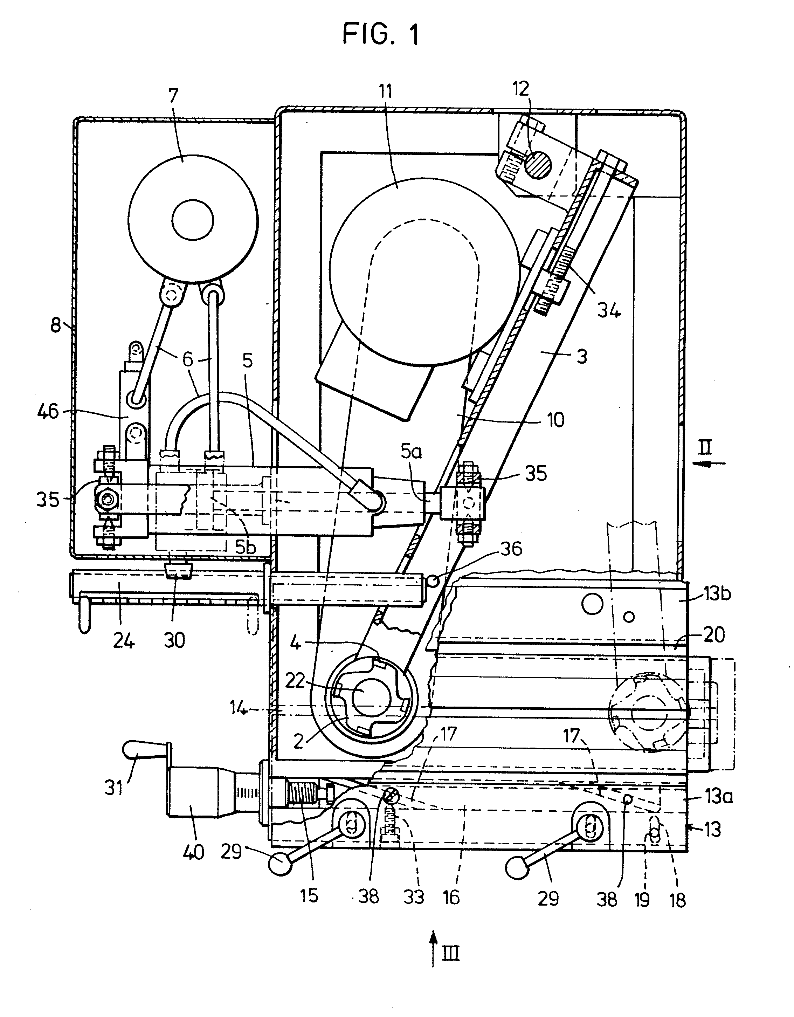

Fig. 1 eine Draufsicht auf die erfindungsgemässe Kantenbrechmaschine, teilweise abgebrochen,

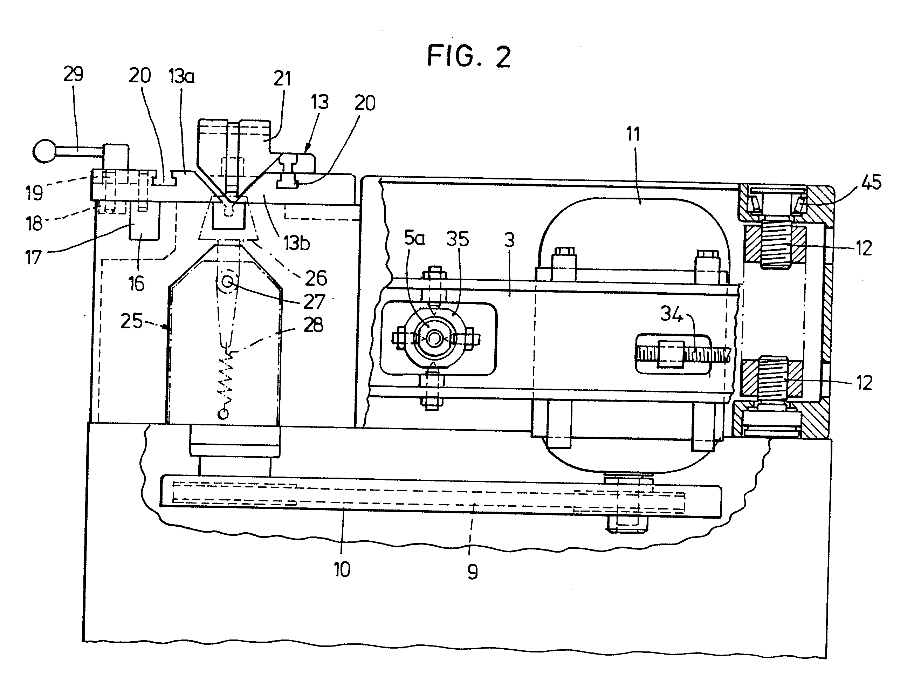

Fig. 2 eine Seitenansicht der Kantenbrechmaschine nach der Fig. 1 in Richtung des Pfeiles II, teilweise abgebrochen,

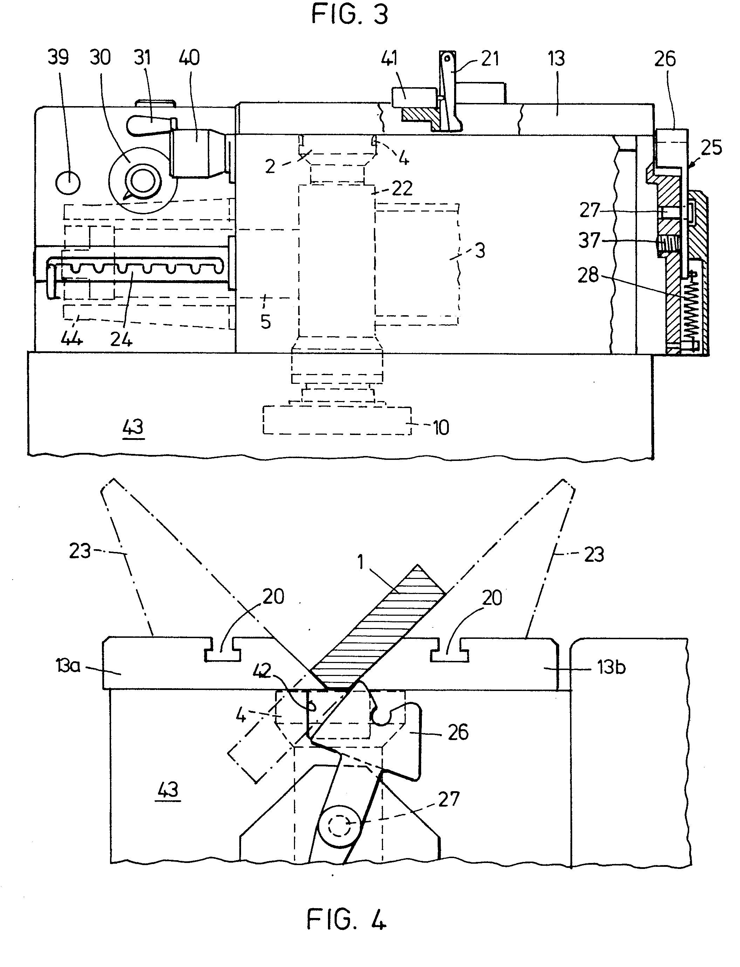

Fig. 3 eine Vorderansicht der Kantenbrechmaschine nach der Fig. 1 in Richtung des Pfeiles III, teilweise abgebrochen,

Fig. 4 eine Teilseitenansicht der Aufnahmevorrichtung mit einem abgewinkelten Werkstück in Richtung des Pfeiles II,

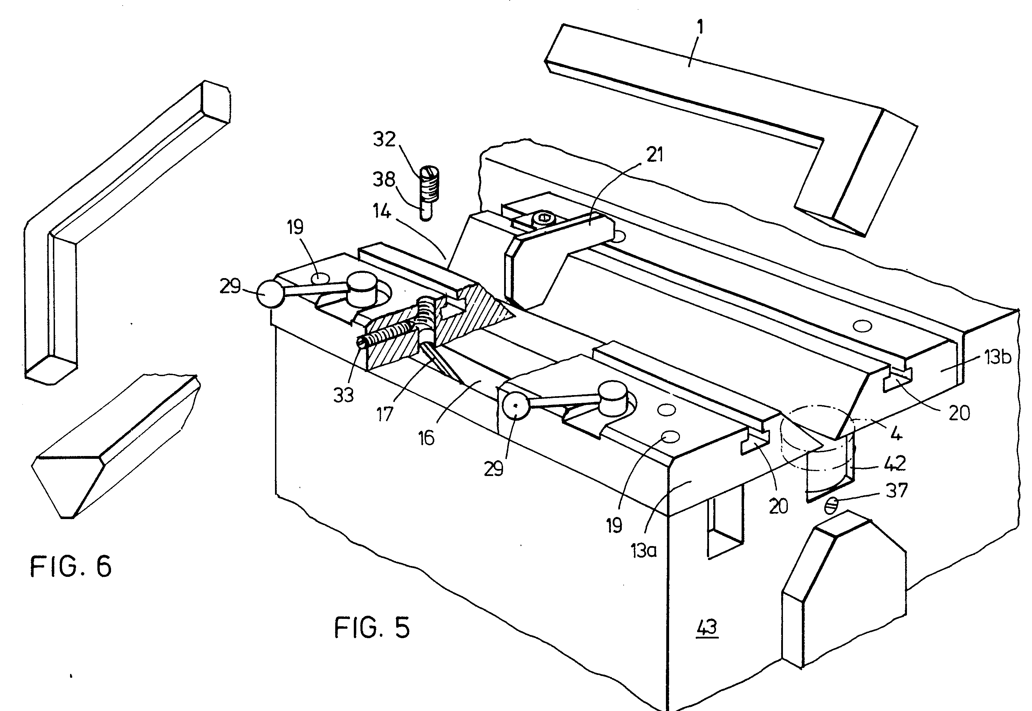

Fig. 5 eine perspektivische Ansicht der Aufnahmevorrichtung mit einem einzulegenden abgewinkelten Werkstück, wie nach der Fig. 4, jedoch ohne Unfallschutzvorrichtung und

Fig. 6 eine perspektivische Ansicht von zwei bearbeiteten Werkstücken mit abgebrochenen Kanten.

Die in den Figuren dargestellte Kantenbrechmaschine zur Bearbeitung von Werkstücken mit Kanten kann als vollautomatische Einheit verwendet werden oder die Werkstücke können, um ihre Kanten zu brechen, von Hand geführt werden.

Die Kantenbrechmaschine weist einen Tisch 43 und eine am Tisch angeordnete Aufnahmevorrichtung 13 für Werkstück 1 auf, die aus zwei prismenförmigen Linealen 13a, 13b besteht. Zwischen dem einen Lineal 13a und dem anderen Lineal 13b ist ein Schneidschlitz 14 gebildet. Durch diese Form der Aufnahmevorrichtung wird das Einlegen des Werkstückes 1 erleichtert. Die zu bearbeitende Kante des eingelegten Werkstückes 1 kommt zu liegen in dem Schneidschlitz 14.

Die prismenförmigen Lineale 13a, 13b sind auswechselbar, so dass der durch die beiden Lineale 13a, 13b eingeschlossene Winkel verändert werden kann. Das eine Lineal 13a ist gegenüber dem anderen Lineal 13b zur Veränderung der Schneidschlitzbreite parallel und stufenlos querverstellbar. Diese Querverstellung des einen Lineals 13a geschieht durch eine Einstelleinrichtung, die eine Messtrommel 40 mit einer Kurbel 31, eine Gewindespindel 15 mit Skala, eine Leiste 16 mit zwei Schrägnuten 17 und zwei in die Schrägnuten 17 eingreifenden
Stiften 38 sowie eine im rechten Winkel zur Längsrichtung des einen Lineals 13a liegende Nut 18 aufweist,
in welche ein weiterer Stift 19 eingreift.

Durch diese Einstelleinrichtung kann die Schneidschlitzbreite mikrometrisch präzis und stufenlos eingestellt werden. Durch die Gewindespindel 15 wird die
Leiste 16, welche im Tisch 43 genau geführt wird, verschoben. Die Verschiebung der Leiste 16 in Längsrichtung des Tisches 43 bewirkt eine Querbewegung des einen
Lineals 13a genau parallel zu dem anderen, festen Lineal 13b. Zur Eichung der genauen Parallelität der beiden Lineale 13a, 13b ist der eine Stift 38 mit einem
Exzenter 32 versehen, der mittels einer Schraube 33
fixiert wird.

Die beiden Lineale 13a, 13b sind mit Längsnuten 20 zur Befestigung von Anschlägen 21, nichtdargestellten Spannelementen oder Stützelementen 23 für
grössere Werkstücke versehen. Zur Arretierung des eingestellten einen Lineals 13a sind Hebel 29 vorgesehen.

Das Schneidwerkzeug 2 ist ein an einer Spindel 22
um eine vertikale Achse drehbarer Eckstirnfräser mit
auswechselbaren Hauptmetallschneidkörpern 4. Die Spindel 22 mit dem Schneidwerkzeug 2 ist an einem Ende eines in einer horizontalen Ebene schwenkbaren Armes 3
befestigt, der im Hohlraum des Tisches 43 untergebracht
ist. Das rotierende Schneidwerkzeug 2 wird in einer
knapp unter dem Schneidschlitz 14 der Aufnahmevorrichtung 13 verlaufenden kreisbogenförmigen Bahn geführt.
Diese Bahn liegt in einer horizontalen Ebene. Das Werkzeug 2 wird mit dem Schwenkarm 3 in einem stufenlosen
Vorschub und einem Schnellrücklauf bewegt.

Der stufenlose Vorschub des Schneidwerkzeuges 2,
während welchem die in den Schneidschlitz 14 eingelegte Kante des Werkstückes 1 weggeschnitten wird, erfolgt hydropneumatisch mittels eines Kolbenzylinders 5, der durch Befestigungsarme 44 gehalten wird. Mittels des Kolbenzylinders 5 erfolgt auch der Schnellrücklauf des Schneidwerkzeuges 2, jedoch pneumatisch. Der Kolbenzylinder 5 steht einerseits über Leitungen 6 mit einem Druckwandler 7 und andererseits mit einem Regelventil 46 in Verbindung. Der sutfenlos regulierbare Vorschub des Schneidwerkzeuges 2 erfolgt pneumatisch, wobei die Druckluft direkt auf den Kolben 5b wirkt und die Kolbenrückseite durch Oel über ein Regelventil gebremst wird. Der Schnellrücklauf des Schneidwerkzeuges 2 erfolgt durch Umschaltung der Druckluft auf den Druckwandler 7, der das Oel über Rückschlagventile in den Zylinder 5 zurückfördert. Der Vorschub und der Schnellrücklauf können aber auch nur hydraulisch erfolgen.

Das Ende der Kolbenstange 5a des Kolbenzylinders 5 ist am Schwenkarm 3 und das Zylinderende am Maschinengehäuse 8 mit spitzengelagerten Kardans 35 eingehängt. Dies ergibt eine spielfreie gelenkige Lagerung mit geringsten Reibungsverlusten, die auch ein Verklemmen der Kolbenstange 5a oder des Kolbens 5b verhindert und eine gleichmässige Vorschubsgeschwindigkeit ermöglicht. Das andere Ende des Schwenkarms 3 ist an zwei Bolzen 12 drehfest angeordnet. Am anderen Ende des Schwenkarms 3 ist ein elektrischer Motor 11 befestigt. Ueber Keilriemen 9, die von einem Schutzkasten 10 umschlossen sind, wird das Schneidwerkzeug 2 mittels des Elmotors 1 angetrieben. Mittels Spannbolzen 34 werden die Keilriemen 9 gespannt gehalten.

Der Schwenkarm 3 schwenkt in einem einstellbaren Winkel um eine vertikale Achse mit einer reibungslosen, einstellbaren Kegelrollenlagerung 45. Der Weg des Schwenkarmes 3 ist in seinem Ausgangspunkt durch eine verstellbare Anschlagstange 24 begrenzt. Durch die Verstellung der Anschlagstange 24, die sich gegen einen Anschlag 36 am Schwenkarm 3 stützt, wird der Winkel der Ausschwenkung des Schwenkarms 3 verkürzt. Der Weg des Schwenkarms 3 ist am Endpunkt durch einen festen Anschlag 37 begrenzt, welcher Anschlag genau am Ende des Vorschubes des Schneidwerkzeuges 2 in der Stirnwand des Tisches 43 liegt.

An derjenigen Stirnwand des Tisches 43, an welche das Schneidwerkzeug 2 am Endpunkt seines Vorschubes bis in die Innenecke eines abgewinkelten Werkstückes eindringen kann, ist eine Unfallschutzvorrichtung 25 vorgesehen. Die Unfallschutzvorrichtung verdeckt in ihrer Ausgangsstellung eine fingergrosse Oeffnung 42 in der Tischkante. Diese Unfallschutzvorrichtung besteht aus einem Kopf 26 mit Einkerbung, der in einen Arm übergeht, der mittels eines Bolzen 27 am Tisch 43 drehfest angeordnet ist. Am Arm ist eine Zugfeder 28 befestigt, die den in einer vertikalen Ebene verschwenkten Kopf 26 wieder in die Ausgangsstellung automatisch zurückführt. Der Kopf 26 wird von der in den Schneidschlitz 14 übergehenden Oeffnung 42 nur dann weggeschwenkt, wenn ein abgewinkeltes Werkstück eingelegt wird.

Mit 41 ist ein Mikroschalter bezeichnet, der in Verbindung mit dem Anschlag 21 für die automatische Auslösung des Vorschubes des Schneidwerkzeuges 2 sorgt. Mit 39 ist ein Dauerkontakt im Fusschalter und mit 30 die stufenlose Regelung des Fräsvorschubes bezeichnet.

Mit der oben beschriebenen Kantenbrechmaschine können Kanten von abgewinkelten Werkstücken aus Stahl, Leichtmetall, Buntmetall oder Kunststoff bis in die inneren Ecken derselben angeschrägt werden. Die Anschrägungen können eine Breite von bis 8 mm aufweisen und verschiedene Winkel mit den Seitenflächen des Werkstückes einschliessen. Die Bearbeitung geht automatisch vor sich, wobei das Schneidwerkzeug in einen stufenlos regulierbaren Vorschub und einen Schnellrück-

0086283

lauf bewegt wird. Z.B. lange Stäbe aus Buntmetall oder Stahl mit nur geringer Kantenbrechung können auch von Hand durchgestossen werden, ohne dass der automatische Vorschub benützt wird. Bei Stäben mit grösserer Fasenbreite wird der automatische Vorschub benützt, indem der Stab jeweils nur die Arbeitshublänge nachgeschoben und während der Bearbeitung festgehalten wird. Die Leistungsfähigkeit eines Eckstirnfräsers mit auswechselbaren Hartmetallschneidkörpern kann nur mit automatischem Voschub voll ausgenützt werden, wobei eine saubere Kantenbrechung erreicht werden kann. Für meist anfallende Werkstücke wird praktisch keine Einrichtzeit benötigt. Diese Konzeption ermöglicht auch das Aufsetzen von vollautomatischen Vorrichtungen mit Zuführungsmagazin für Werkstücke, die in grossen Serien anfallen.

PATENTANSPRUECHE

1. Kantenbrechmaschine, mit einem Tisch (43), einer am Tisch (43) angeordneten Aufnahmevorrichtung (13) für Werkstück (1), in welcher ein Schneidschlitz (14) für die Kante des Werkstückes (1) gebildet ist, und mit einem Schneidwerkzeug (2) zum Wegschneiden der in den Schneidschlitz (14) ragenden Kante des Werkstückes (1), dadurch gekennzeichnet, dass das rotierende Schneidwerkzeug (2) in einer knapp unter dem Schneidschlitz (14) der Aufnahmevorrichtung (13) verlaufenden, in einer horizontalen Ebene liegenden, kreisbogenförmigen Bahn in stufenlosen Vorschub und in Schnellrücklauf bewegbar ist, und dass in der Stirnwand des Tisches (43), an welche das Schneidwerkzeug (2) am Endpunkt seines Vorschubes gelangt, eine Oeffnung (42) vorgesehen ist, die in den Schneidschlitz (14) übergeht und so gestaltet ist, dass das Schneidwerkzeug (2) am Endpunkt seines Vorschubes mit der Stirnwand des Tisches (43) tangential bündig ist.

2. Kantenbrechmaschine nach Patentanspruch 1, dadurch gekennzeichnet, dass das Schneidwerkzeug (2) ein um eine vertikale Achse drehbarer Eckstirnfräser mit auswechselbaren Hartmetallschneidkörpern (4) ist, der an einem Ende eines in einer horizontalen Ebene schwenkbaren Armes (3) befestigt ist.

3. Kantenbrechmaschine nach den Patentansprüchen 1 und 2, dadurch gekennzeichnet, dass der stufenlose Vorschub und der Schnellrücklauf des Schneidwerkzeuges (2) hydropneumatisch bzw. pneumatisch oder beide nur hydraulisch mittels eines Kolbenzylinders (5) erfolgen.

4. Kantenbrechmaschine nach Patentanspruch 3, dadurch gekennzeichnet, dass sowohl die Kolbenstange (5a) des Kolbenzylinders (5) am Schwenkarm (3) in der Nähe seines einen Endes als auch das Zylinderende am Maschinengehäuse (8) kardanisch aufgehängt sind.

5. Kantenbrechmaschine nach Patentanspruch 2, dadurch gekennzeichnet, dass das Schneidwerkzeug (2) über Keilriemen (9) mittels eines am anderen, um Bolzen (12) drehfest angeordneten Ende des Schwenkarmes (3) befestigten Elmotors (11) angetrieben ist.

6. Kantenbrechmaschine nach Patentanspruch 1, wobei die Aufnahmevorrichtung (13) durch zwei prismenförmige Lineale gebildet ist, dadurch gekennzeichnet, dass das eine Lineal (13a) gegenüber dem anderen Lineal (13b) zur Veränderung der Schneidschlitzbreite parallel und stufenlos querverstellbar ist.

7. Kantenbrechmaschine nach Patentanspruch 6, dadurch gekennzeichnet, dass das eine Lineal (13a) mittels einer Einrichtung querverstellbar ist, die eine Gewindespindel (15) mit Skala, eine Leiste (16) mit zwei Schrägnuten (17) und zwei in die Schrägnuten (17) eingreifende Stifte (38) sowie eine im rechten Winkel zur Längsrichtung des einen Lineals (13a) liegende Nut (18) aufweist, in welche ein weiterer Stift (19) eingreift.

8. Kantenbrechmaschine nach Patentanspruch 6, dadurch gekennzeichnet, dass die beiden prismenförmigen Lineale (13a, 13b) mit Längsnuten (20) zur Befestigung von Anschlägen (21) Spannelementen oder Stützelementen (23) für grössere Werkstücke versehen sind.

9. Kantenbrechmaschine nach Patentanspruch 1, gekennzeichnet durch eine verstellbare Anschlagstange (24) zur Bestimmung des Ausgangspunktes der Bewegungsbahn des Schwenkarmes (3).

10. Kantenbrechmaschine nach Patentanspruch 1, gekennzeichnet, durch eine Unfallschutzvorrichtung (25), die an derjenigen Stirnwand des Tisches (43), an welche das Schneidwerkzeug (2) am Endpunkt seines Vorschubes gelangt, in vertikaler Ebene von der Stirnwandöffnung (42) wegschwenkbar und in ihre Ausgangsstellung automatisch zurückführbar angeordnet ist.

0086283

1/4

FIG. 1

FIG. 2

2/4

0086283

FIG. 3

FIG. 4

FIG. 6

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 046 180 (MARSHALL) <br> * Spalte 3, Zeilen 1-12; Spalte 4, Zeilen 38-55 * | 1-3 | B 23 C 3/12 <br> B 27 D 5/00 <br> B 23 Q 3/00 |
| | --- | | |
| A | DE-A-2 735 283 (KÖLKER) <br> * Seite 3, Zeile 18 * | 2 | |
| | --- | | |
| A | US-A-4 131 143 (MAYO) <br> * Spalte 5, Zeilen 40-62; Spalte 7, Zeilen 44-46 * | 1,3 | |
| | --- | | |
| A | US-A-4 193 431 (WOOD) <br> * Spalte 3, Zeilen 37-41 * | 5 | |
| | --- | | |
| A | AT-B- 298 032 (BOHRN) <br> * Seite 2, Zeilen 53-57 * | 6 | **RECHERCHIERTE SACHGEBIETE (Int. Cl. ³)** |
| | --- | | |
| A | US-A-2 764 190 (HOWARD) <br> * Anspruch 1 * | 7 | B 23 C <br> B 23 D |
| | --- | | B 27 B |
| A | US-A-2 744 549 (JOHNSON) <br> * Spalte 4, Zeilen 41-75 * | 7 | B 27 C <br> B 27 D <br> B 23 Q |
| | --- | | |
| A | US-A-3 124 181 (CLEMANS) <br> * Spalte 2, Zeilen 21-32 * | 8 | |
| | --- | | |
| A | FR-A-1 415 839 (GUIDON) | | |
| | ---    -/- | | |

Der vorliegende Recherchenbericht wurde für alle Patentansprüche erstellt.

| Recherchenort <br> DEN HAAG | Abschlußdatum der Recherche <br> 20-05-1983 | Prüfer <br> DE GUSSEM J.L. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 125 934 (PERSSON)<br><br>- - - - - | | |
| | | | **RECHERCHIERTE SACHGEBIETE (Int. Cl. 3)** |

Der vorliegende Recherchenbericht wurde für alle Patentansprüche erstellt.

| Recherchenort<br>DEN HAAG | Abschlußdatum der Recherche<br>20-05-1983 | Prüfer<br>DE GUSSEM J.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, überein- stimmendes Dokument

EPA Form 1503 03.82